# EUROPÄISCHE PATENTSCHRIFT

(11) **EP 1 802 431 B1**
(45) Veröffentlichungstag und Bekanntmachung des Hinweises auf die Patenterteilung: **16.10.2013**
(21) Anmeldenummer: 05775045.7
(22) Anmeldetag: 08.08.2005
(51) Int. Cl.: B28C 5/42, F16F 1/44

(54) **ANTRIEB FÜR EINE MISCHTROMMEL**
MIXING DRUM DRIVE
DISPOSITIF D'ENTRAINEMENT D'UN TAMBOUR MELANGEUR

(30) Priorität: 07.08.2004 DE 102004038504
(43) Veröffentlichungstag der Anmeldung: 04.07.2007
(73) Patentinhaber: ZF Friedrichshafen AG, 88038 Friedrichshafen (DE)
(72) Erfinder: HEILIG, Eduard, 88048 Friedrichshafen (DE); GEIER, Andreas, 94118 Jandelsbrunn (DE); SCHIFFNER, Klaus, 53474 Bad Neuenahr-Ahrweiler (DE); FRONDORF, Michael, 53783 Eitorf (DE)
(86) Internationale Anmeldenummer: PCT/EP2005/008581
(87) Internationale Veröffentlichungsnummer: WO 2006/015832

(56) Entgegenhaltungen:
- WO-A1-2006/015833
- WO-A1-2006/015834
- WO-A1-2006/015835
- WO-A1-2006/015838
- DE-A1- 2 341 250
- DE-A1- 10 033 661
- DE-B- 1 182 125
- FR-A- 2 146 053
- GB-A- 668 010

## Beschreibung

Die Erfindung betrifft einen Mischtrommel-antrieb nach der im Oberbegriff von Anspruch 1 näher definierten Art.

Die DE 100 33 661 A1 offenbart einen Mischtrommelantrieb bei welcher ein Antriebsmotor ein inneres Zentralrad einer Planetenstufe antreibt, deren äußeres Zentralrad den Abtrieb bildet und die Mischtrommel antreibt. Die Mischtrommel ist über eine lagerung drehbar im Gehäuse gelagert, welches sich auf einem Lagerbock abstützt. Die Lagerung ist als Pendelrollenlagerung ausgeführt, um Bewegungen zwischen dem Lagerbock und der Mischtromel auszugleichen. Da die Trommel durch das Gewicht ihres Inhalts und deren Einbauwinkel sowohl eine Axial- als auch eine Radialkomponente der Kraft entwickelt, welche auf das Pendelrollenlager wirkt, wird die Lagerreihe des Pendelrollenlagers, welche zusätzlich die Axialkraft der Mischtrommel aufnehmen muß, zusätzllich belastet, was zu einer Vergrößerung des Pendelrollenlagers führt, um das Lager betriebssicher auszuführen.

Die DE 23 41 250 A1, WO 2006/015883 A, WO 2006/015834 A , WO 2006/015838 und die WO 2006/015835 offenbaren Mischtrommelantriebe, bei welchen der Ausgleich zwischen der Mischtrommel und dem Fahrgestell des Fahrzeugs mit einem elastischen Element erfolgt.

Der vorliegenden Erfindung liegt die Aufgabe zugrunde, einen Mischtrommel-antrieb zu schaffen, welcher die Mischtrommel antreibt und drehbar lagert und hierbei auf sichere Weise Bewegungen zwischen der Mischtrommel und dem Lagerbock ausgleicht, wobei der Antrieb kompakt auszuführen ist.

Die Aufgabe wird mit einem, auch die kennzeichnenden Merkmale des Hauptanspruchs aufweisenden, gattungsgemäßen Mischtrommel-antrieb gelöst.

Erfindungsgemäß weist der Mischtrommel-antrieb eine Ausgleichsvorrichtung auf, welche zum Ausgleich von Bewegungen zwischen der Mischtrommel und dem Lagerbock ausgeführt ist, wobei die Ausgleichsvorrichtung aus einem elastischen Material besteht, welches so mit einem ersten und einem zweiten Bauteil zusammenwirkt, dass die Kräfte der Trommel übertragbar sind.

In einer Ausgestaltungsform der Erfindung ist das zweite Bauteil, welches mit dem elastischen Material zusammenwirkt, einstückig mit dem Gehäuse des Antriebs für die Mischtrommel ausgeführt. Es besteht die Möglichkeit, das elastische Material mit dem zweiten Bauteil zu verbinden, beispielsweise mit Hilfe eines Klebers oder durch Anvulkanisieren, es besteht aber auch die Möglichkeit, das elastische Material nur lose in das zweite Bauteil einzulegen, da durch die Gewichtskraft der Mischtrommel eine dauernde Kraft vom zweiten Bauteil auf das elastische Element wirkt. Es besteht auch die Möglichkeit, das zweite Bauteil so auszuführen, dass dieses über Verbindungselemente mit dem Gehäuse des Antriebs für die Mischtrommel verbindbar ist.

In einer weiteren Ausgestaltungsform ist das zweite Bauteil topfförmig ausgeführt und umgibt das elastische Material. Um die Axialkräfte der Mischtrommel besser aufnehmen zu können, ist das topfförmige zweite Bauteil in dem der Mischtrommel zugewandten Bereich so ausgeführt, dass eine größere axiale Aufstandsfläche für das elastische Element entsteht, wodurch die Axialkräfte der Mischtrommel bei gleichbleibender Flächenpressung auf das elastische Element übertragen werden können.

Das elastische Element stützt sich auf einem ersten Bauteil ab, auf welchem es entweder aufliegt oder über eine Klebeverbindung oder über eine Vulkanisierverbindung mit diesem verbunden ist, wobei das erste Bauteil ortsfest über Verbindungselemente mit dem Lagerbock des Fahrzeugs verbunden ist. Es besteht auch die Möglichkeit, den Lagerbock mit dem ersten Bauteil einstückig auszuführen.

In einer weiteren Ausführungform weist das erste Bauteil ebenfalls im axialen Bereich, welcher in Richtung Mischtrommel weist, eine vergrößerte Fläche auf, auf welcher sich das elastische Element abstützen kann.

In einer weiteren Ausgestaltungsform weist das erste Bauteil einen Vorsprung auf, über welchen die axialen Kräfte der Mischtrommel in den Lagerbock eingeleitet werden, ohne die Verbindungselemente, mit welchen das erste Bauteil mit dem Lagerbock verbunden ist, durch Axialkräfte zu belasten.

In einer weiteren Ausgestaltungsform weist das elastische Element zusätzlich mindestens eine metallische Einlage auf, welche das elastische Element stabilisiert. Vorzugsweise ist diese metallische Einlage, im Falle, dass das elastische Element topfförmig ausgebildet ist, in den Topfwandungen angeordnet.

Das zweite Bauteil ist so ausgeführt, dass es in Verbindung mit dem ersten Bauteil oder in Verbindung mit dem Lagerbock einen mechanischen Anschlag bildet, welcher so ausgebildet ist, dass das Mischergetriebegehäuse sich nur innerhalb eines bestimmten Bereichs durch Verformung des elastischen Elements bewegen kann und dieser elastische Bereich durch Anschläge des zweiten Bauteils auf dem Lagerbock oder dem ersten Bauteil begrenzt werden.

In einer weiteren Ausgestaltungsform sind diese Anschläge nahezu im Mittelpunkt des zweiten Bauteils angeordnet.

In einer weiteren Ausgestaltungsform der Erfindung weist das erste Bauteil ein Verbindungselement auf, welches das zweite Bauteil, entgegen der Gewichtskraft der Mischtrommel, auf dem Lagerbock hält.

Indem die Bewegungen zwischen der Mischtrommel und dem Lagerbock von dem elastischen Element ausgeglichen werden, besteht die Möglichkeit, die Lagerung, über welche die Mischtrommel drehbar gelagert ist, so auszuführen, dass diese in ihren Abmessungen kompakt ausgeführt sein kann, da diese Lagerung ausschließlich die Axial- und Radialkräfte der Mischtrommel aufnehmen und keine zusätzlichen Ausgleichsbewegungen ausführen muß.

In einer weiteren Ausgestaltungsform der Erfindung ist diese Lagerung als Kegelrollenlagerung ausgeführt, wobei die Kegelrollenlager so vorgespannt sind, dass auch bei Axialkraft der Mischtrommel beide Lagerreihen gleichmäßig belastet werden. Indem die Ausgleichsbewegung der Mischtrommel zum Lagerbock nicht mehr innerhalb des Getriebegehäuses aufgenommen wird, kann das Untersetzungsgetriebe mit dem Antriebsmotor kompakter ausgeführt sein.

Weitere Merkmale sind der Figuren-Beschreibung zu entnehmen. Es zeigen:

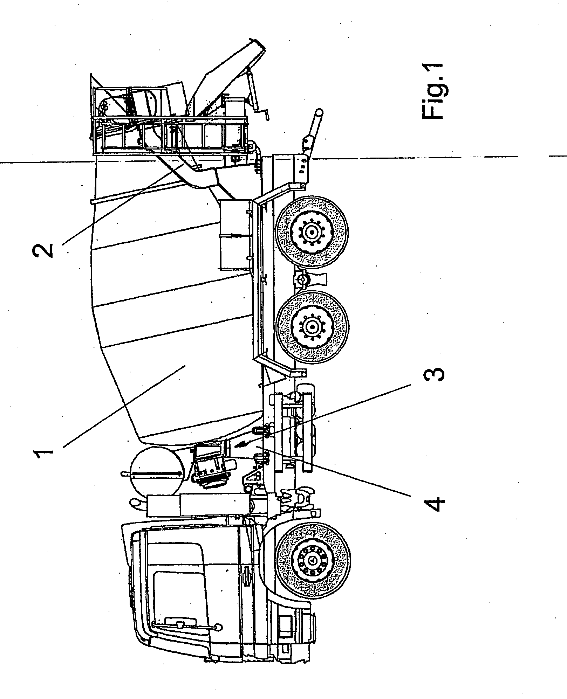

- Fig. 1: einen Transport-Betonmischer mit einem Antrieb für die Mischtrommel;

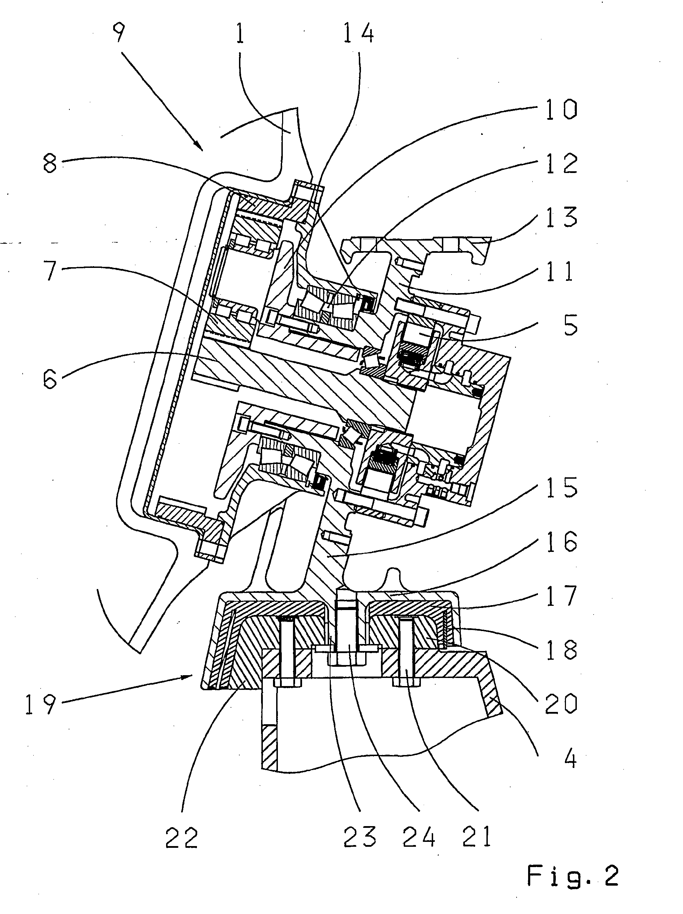

- Fig. 2: eine Schnitt-Darstellung des Antriebs für die Mischtrommel;

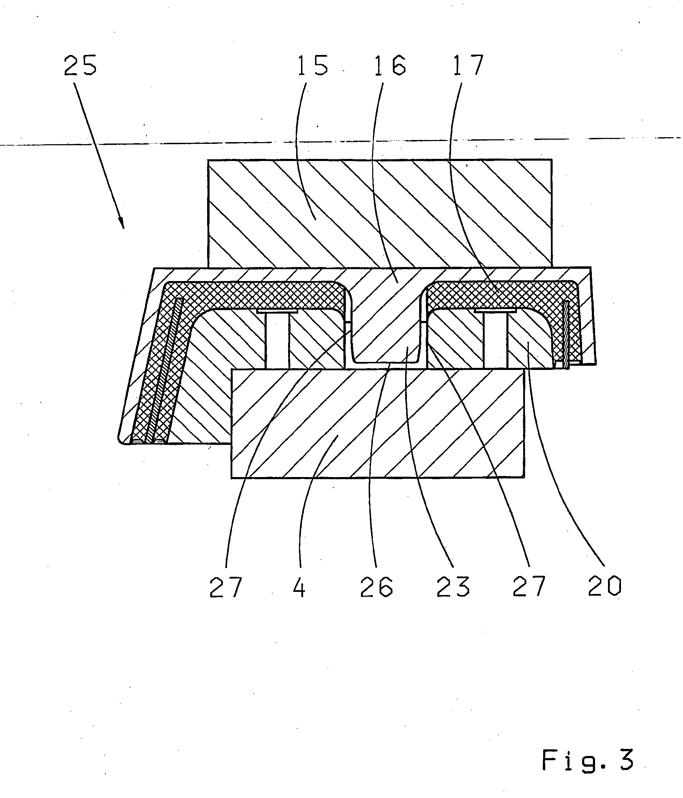

- Fig. 3: eine Schnitt-Darstellung der Ausgleichsvorrichung;

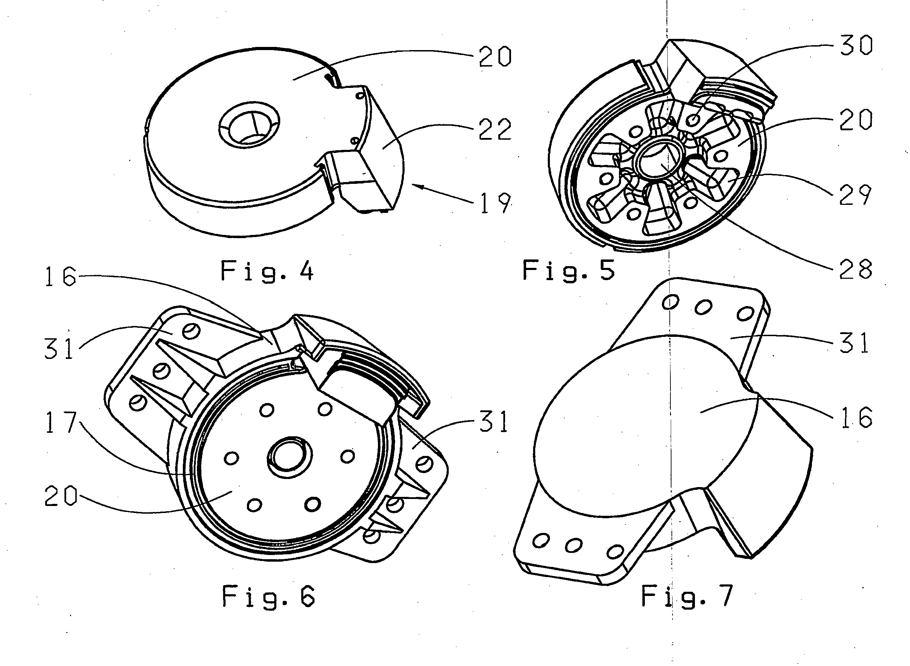

- Fig. 4: eine räumliche Darstellung der Ausgleichsvorrichtung;
- Fig. 5: eine räumliche Darstellung der Ausgleichsvorrichtung;
- Fig. 6: eine räumliche Darstellung der Ausgleichsvorrichtung, welche mit dem Gehäuse verbunden werden kann;
- Fig. 7: eine räumliche Darstellung der Ausgleichsvorrichtung, welche mit dem Gehäuse verbunden werden kann;

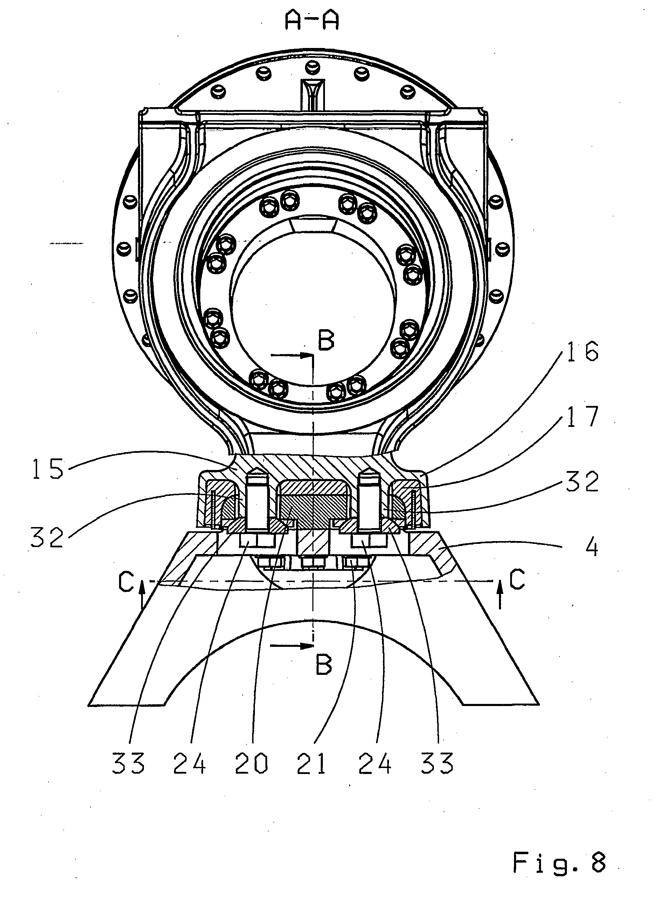

- Fig. 8: eine Darstellung des Antriebs mit dem Lagerbock aus Sicht des Fahrerhauses des Fahrzeugs;

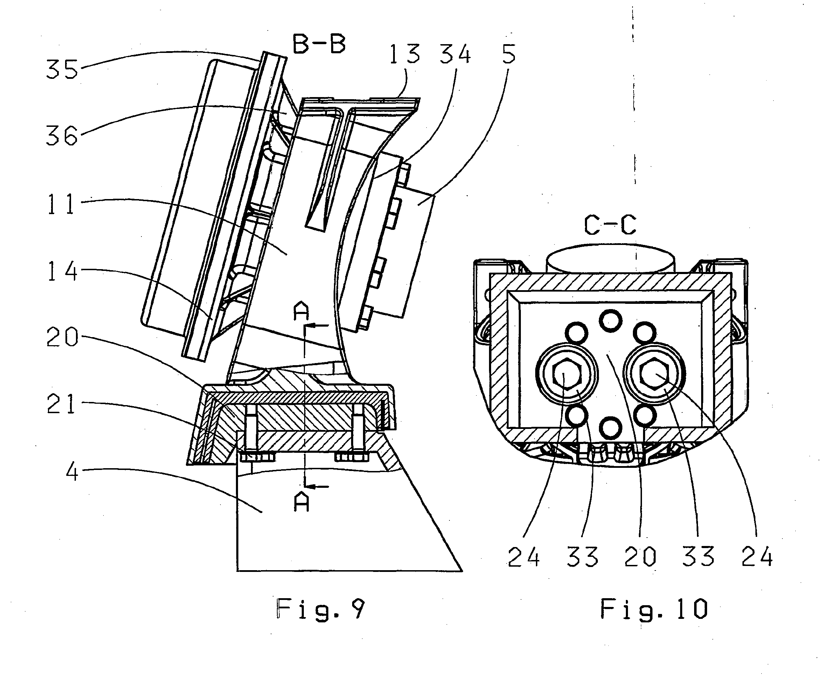

- Fig. 9: eine Seiten-Ansicht des Antriebs mit dem Lagerbock;
- Fig. 10: eine Schnitt-Darstellung durch den Lagerbock und

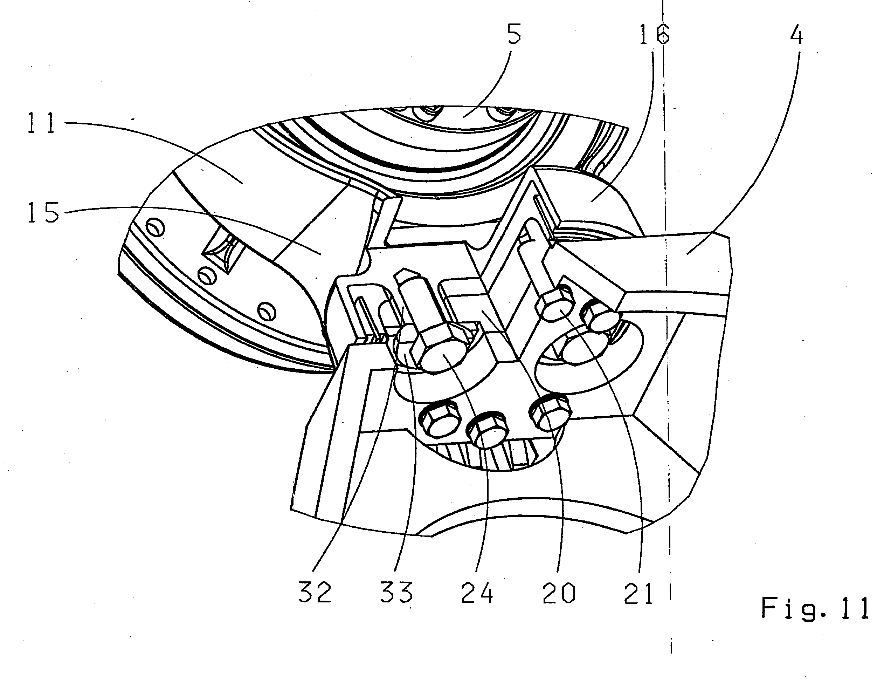

- Fig. 11: eine räumliche Schnitt-Darstellung durch den Lagerbock.

Fig.1:
Ein Transport-Betonmischer weist eine Trommel 1 auf, welche einerseits in zwei Lagerrollen 2 und andererseits über einen Antrieb 3 gelagert ist. Der Antrieb 3 treibt die Trommel 1 in einer Drehbewegung an, wodurch Mischgut, beispielsweise Beton, in die Trommel eingezogen, gemischt oder aus dieser wieder entleert werden kann. Hierbei wird der Antrieb in der Drehrichtung "Einziehen" oder der Drehrichtung "Entleeren" angetrieben. Der Antrieb nimmt die Gewichtskraft der Mischtrommel 1 auf und gibt diese an den Lagerbock 4 ab. Der Lagerbock 4 ist mit dem Fahrzeugrahmen des Fahrzeugs verbunden. Fährt das Fahrzeug durch unebenes Gelände, so treten Verwindungen des Fahrzeugrahmens auf, wodurch der Lagerbock 4 eine Relativbewegung zur Mischtrommel 1 ausführt.

Fig. 2:
Ein Antriebsmotor 5, vorzugsweise ein Radialkolbenmotor, insbesondere ein außen abgestützter Radialkolbenmotor, treibt ein inneres Zentralrad 6 an, welches über Planetenräder 7 ein äußeres Zentralrad 8 antreibt. Das äußere Zentralrad 8 ist unmittelbar oder über ein weiteres Bauteil mit der Trommel 1 drehfest verbunden.

In einer Ausgestaltungsform ist das Planetengetriebe 9, zumindest teilweise, innerhalb der Mischtrommel 1 angeordnet. Der Planetenträger 10 ist drehfest mit dem Gehäuse 11 verbunden, wobei die Lagerung 12 zwischen dem Planetenträger 10 und dem Antriebsmotor 5 angeordnet sein kann. Das Gehäuse 11 weist eine Aufnahme 13 auf, auf welcher beispielsweise ein Wassertank angebracht sein kann. Ein Flansch 14, welcher mit der Trommel 1 drehfest verbunden ist, leitet die Gewichtskraft der Trommel in die Lagerung 12 ein, welche sich auf dem Gehäuse 11 abstützt. Die Lagerung 12 ist als Kegelrollenlagerung ausgeführt, welche vorzugsweise so vorgespannt ist, dass die beiden Rollenreihen gleichmäßig belastet werden. Das Gehäuse 11 weist einen Fuß 15 auf, welcher einstückig mit dem zweiten Bauteil 16 verbunden ist. Es besteht auch die Möglichkeit, das zweite Bauteil 16 über Verbindungselemente mit dem Fuß 15 zu verbinden. Das zweite Bauteil 16 umschließt topfförmig ein elastisches Element 17, welches beispielsweise aus einem Elastomer besteht, und ebenfalls topfförmig ausgebildet ist. Im Wandungsbereich des elastischen Elements 17 sind Metallelemente 18 eingelagert, welche das elastische Element 17 verstärken. Das elastische Element 17 kann die Form eines kreisrunden Topfes aufweisen, es besteht aber auch die Möglichkeit, dass das elastische Element 17 andere Formen, wie beispielsweise die eines Sechsecks oder Quadrats oder Rechtecks, aufweist. In dem der Trommel 1 zugewandten Bereich 19 weisen das zweite Bauteil 16, das elastische Element 17 und das erste Bauteil 20 einen Bereich auf, in welchem die Wandung des Topfes länger ist als in den anderen Bereichen. Dieser Bereich 19 wird insbesondere zur Aufnahme der axialen Kräfte der Trommel 1 verwendet. Das elastische Element 17 umschließt topfförmig das erste Bauteil 20, welches mit dem Lagerbock 4 über Verbindungselemente 21 verbunden ist. Es besteht auch die Möglichkeit, das erste Bauteil 20 einstückig mit dem Lagerbock 4 auszubilden. In dem der Trommel 1 zugewandten Bereich weist das erste Bauteil 20 im Bereich 19 einen Anschlag 22 auf, in welchem die Axialkraft der Trommel an den Lagerbock 4 übertragen wird, wodurch die Verbindungselemente 21 nicht auf Schub beansprucht werden. Das elastische Element 17 kann mit dem ersten Bauteil 22 verbunden sein, beispielsweise über eine Klebe- oder Vulkanisierverbindung, es besteht aber auch die Möglichkeit, das elastische Element 17 lose auf dem ersten Bauteil 20 aufliegen zu lassen.

In einer weiteren Ausgestaltungsform besteht ebenfalls die Möglichkeit, die Wandung des elastischen Bauteils 17, des zweiten Bauteils 16 und des ersten Bauteils 20 gleich lang auszuführen. Die Verbindungselemente 21 können von der Fahrzeugunterseite in das erste Bauteil 22 eingeschraubt sein, es besteht jedoch auch die Möglichkeit, dass die Verbindungselemente 21 von der fahrzeugoberseitigen Richtung eingeschraubt sind. Im zentralen Bereich des zweiten Bauteils 16 weist das zweite Bauteil 16 einen Zapfen 23 auf, welcher einerseits zu starke elastische Bewegungen des elastischen Elements 17 verhindert, indem dieser Zapfen im ersten Bauteil 20 zur Anlage kommt, und andererseits weist dieser Zapfen 23 ein Verbindungselement 24 auf, welches ein Abheben des zweiten Bauteils 16, entgegen der Gewichtskraft der Trommel 1, verhindert. Es besteht auch die Möglichkeit, das zweite Bauteil 16 und den Lagerbock 4 so auszugestalten, dass beispielsweise im Bereich des Topfwandungsrandes ein mechanischer Anschlag zur Begrenzung der Bewegungen ausgebildet ist.

In einer weiteren Ausgestaltungsform besteht die Möglichkeit, das äußere Zentralrad 8 fest mit dem Gehäuse 11 und den Planetenträger 10 mit der Trommel zu verbinden, wobei das innere Zentralrad 6 der Antrieb ist und mit dem Antriebsmotor 5 verbunden ist. Durch diese Anordnung kann im Planetengetriebe 9 eine größere Übersetzung bei gleichem Bauraum realisiert werden.

Fig. 3:
Die Ausgleichsvorrichtung 25 besteht aus dem ersten Bauteil 20, dem elastischen Element 17 und dem zweiten Bauteil 16. Das zweite Bauteil 16 ist über nicht gezeigte Verbindungselemente mit dem Fuß 15 des Gehäuses verbunden. Das erste Bauteil 20 ist über nicht gezeigte Verbindungselemente mit dem Lagerbock 4 verbunden. Der Zapfen 23 begrenzt die Bewegung des ersten Bauteils 20 zum zweiten Bauteil 16, indem die Anschlagfläche 26 auf dem Lagerbock 4 aufsteht und die Ringfläche 27 in der Bohrung 28 des ersten Bauteils 20 ansteht. Indem das elastische Element 17 topfförmig ausgebildet ist, können Kräfte aus allen Richtungen vom Fuß 15 in den Lagerbock 4 übertragen werden.

Fig. 4:
Das erste Bauteil 20 weist im Bereich 19 einen Anschlag 22 auf, über welchen die Axialkraft an den nicht gezeigten Lagerbock übertragen wird.

Fig. 5:
Das erste Bauteil 20 weist eine zentrische Bohrung 28 auf, über welche der nicht gezeigte Zapfen sich abstützen kann. Ebenso weist das erste Bauteil 20 Ausnehmungen 29 auf, welche zwischen den Gewindebohrungen 30 angeordnet sind, um das Gewicht des ersten Bauteils 20 zu reduzieren.

Fig. 6:
Das zweite Bauteil 16 weist Laschen 31 auf, über welche das zweite Bauteil 16 mit dem nicht gezeigten Gehäusefuß 15 verbunden werden kann.

Fig. 8:
Das erste Bauteil 20 ist über Verbindungselemente 21 mit dem Lagerbock 4 verbunden. Der Fuß 15 ist einteilig mit dem zweiten Bauteil 16 ausgebildet, welches über das elastische Element 17 auf dem ersten Bauteil 20 aufliegt. Um zu verhindern, dass das zweite Bauteil 16 vom Lagerbock abhebt, d. h., sich entgegen der Gewichtskraft der Trommel bewegt, weist das zweite Bauteil 16 mindestens zwei Zapfen 32 auf, welche wie die Zapfen 23 der vorhergehenden Figuren ausgebildet sein können, jedoch mittels einer sphärischen Scheibe 33 im ersten Bauteil 20 gehalten sind. Dadurch ist es möglich, durch die Verbindungselemente 24 das elastische Element 17 unter Vorspannung einzubauen. Die benötigten Bewegungen, d. h. die Bewegungsfreiheit, ist durch die sphärische Ausbildung der sphärischen Scheiben 33 gewährleistet. Es besteht auch die Möglichkeit, nur einen Zapfen 32 anzuordnen oder mehr als zwei Zapfen zu verwenden.

Fig.9:
Das erste Bauteil 20 ist über Verbindungselemente 21 mit dem Lagerbock 4 verbunden. Das Gehäuse 11 weist einerseits eine Anflanschfläche 34 zur Anflanschung des Antriebsmotors 5 und andererseits eine Anflanschfläche 35 zur Anflanschung des Antriebs an die nicht gezeigte Trommel 1 auf. Die Aufnahme 13 ist zur Aufnahme eines Wassertanks ausgebildet. Der Flansch 14 ist mit Rippen 36 ausgebildet, um die Kräfte zu übertragen.

Fig. 10:
Das erste Bauteil 20 ist über Verbindungselemente 24 mit dem nicht gezeigten zweiten Bauteil 15 verbunden. Die Verbindungselemente liegen auf sphärischen Scheiben 33 auf, welche die Bewegung zwischen dem ersten Bauteil 16 und dem zweiten Bauteil 20 ermöglichen.

Fig. 11:
Das erste Bauteil 20 ist über Verbindungselemente 21 mit dem Lagerbock 4 verbunden. Die Zapfen 32 sind über Verbindungselemente 24 und sphärische Scheiben 33 mit dem ersten Bauteil 20 verbunden. Das erste Bauteil 16 ist einstückig mit dem Fuß 15 ausgebildet. Der Antriebsmotor 5 ist an das Gehäuse 11 angeflanscht, es besteht jedoch auch die Möglichkeit, den Antriebsmotor 5 in das Gehäuse 11 zu integrieren.

### Bezugszeichen

| | | | |
|---|---|---|---|
| 1 | Trommel | 27 | Ringfläche |
| 2 | Lagerrollen | 28 | Bohrung |
| 3 | Antrieb | 29 | Ausnehmungen |
| 4 | Lagerbock | 30 | Gewindebohrung |
| 5 | Antriebsmotor | 31 | Laschen |
| 6 | inneres Zentralrad | 32 | Zapfen |
| 7 | Planetenräder | 33 | sphärische Scheibe |
| 8 | äußeres Zentralrad | 34 | Anflanschfläche |
| 9 | Planetengetriebe | 35 | Anflanschfläche |
| 10 | Planetenträger | 36 | Rippen |
| 11 | Gehäuse | | |
| 12 | Lagerung | | |
| 13 | Aufnahmen | | |
| 14 | Flansch | | |
| 15 | Fuß | | |
| 16 | zweites Bauteil | | |
| 17 | elastisches Element | | |
| 18 | Metallelemente | | |
| 19 | Bereich | | |
| 20 | erstes Bauteil | | |
| 21 | Verbindungselemente | | |
| 22 | Anschlag | | |
| 23 | Zapfen | | |
| 24 | Verbindungselement | | |
| 25 | Ausgleichsvorrichtung | | |
| 26 | Anschlagsfläche | | |

## Patentansprüche

1. Mischtrommelantrieb mit einer Mischtrommel (1), einem Lagerbock (4) und einen Antriebsmotor (5), mittels welchem die Mischtrommel (1) antreibbar ist, mit einer Lagerung (12), über welche die Mischtrommel (1) drehbar gelagert ist, einem Gehäuse (11), über welches die Gewichtskraft der Mischtrommel in den Lagerbock (4) einleitbar ist, mit einer Ausgleichsvorrichtung (25) zum Ausgleich der Bewegungen zwischen der Mischtrommel (1) und dem Lagerbock (4), **dadurch gekennzeichnet, dass** die Ausgleichsvorrichtung (25) aus einem elastischen Element (17) besteht, wobei das elastische Element (17) so mit ersten und zweiten Bauteilen (20, 16) des Mischtrommelantriebs zusammenwirkt, dass die Kräfte der Mischtrommel über das elastische Element (17) übertragen werden, wobei das erste Bauteil (20) mit dem Lagerbock (4) verbunden ist und das zweite Bauteil (16) mit dem Gehäuse (11) verbunden ist, wobei das elastische Element (17) mit Hilfe eines Klebers oder durch Anvulkanisieren mit dem zweiten Bauteil (16) verbunden ist oder das elastische Element (17) in das zweite Bauteil (16) lose eingelegt ist, und das elastische Element (17) entweder auf dem ersten Bauteil (20) aufliegt oder über eine Klebeverbindung oder über eine Vulkanisierverbindung mit diesem verbunden ist und wobei um ein Abheben des zweiten Bauteils (16) entgegen der Gewichtskraft der Trommel vom Lagerbock (4) zu verhindern, dadurch die Mischtrommel (1) entgegen der Gewichtskraft der Mischtrommel (1) auf dem Lagerbock (4) zu halten, das zweite Bauteil (16) so ausgeführt ist, dass es in Verbindung mit dem ersten Bauteil (20) oder in Verbindung mit dem Lagerbock (4) einen mechanischen Anschlag bildet, welcher so ausgebildet ist, dass das Gehäuse (11) sich nur innerhalb eines bestimmten Bereichs durch Verformung des elastischen Elements (17) bewegen kann und dieser Bereich durch Anschläge des zweiten Bauteils (16) auf dem Lagerbock (4) oder dem ersten Bauteil (20) begrenzt wird..

2. Mischtrommelantrieb nach Anspruch 1, **dadurch gekennzeichnet, dass** das zweite Bauteil (16) einstückig mit dem Gehäuse (11) ausgeführt ist.

3. Mischtrommelantrieb nach Anspruch 1, **dadurch gekennzeichnet, dass** das zweite Bauteil (16) topfförmig ausgebildet ist und das elastische Element (17) umgibt.

4. Mischtrommelantrieb nach Anspruch 1, **dadurch gekennzeichnet, dass** das elastische Element (17) einen metallischen Verstärkungskern (18) aufweist.

5. Mischtrommelantrieb nach Anspruch 1, **dadurch gekennzeichnet, dass** das erste Bauteil (20) über Verbindungselemente (21) mit dem Lagerbock (4) verbindbar ist.

6. Mischtrommelantrieb nach Anspruch 1, **dadurch gekennzeichnet, dass** die Ausgleichsvorrichtung (25) einen axialen Bereich (19) aufweist, in welchem die Kontaktfläche zwischen dem ersten Bauteil (20), dem zweiten Bauteil (16) und dem elastischen Element (17) vergrößert ausgeführt ist, um die axiale Kraft der Mischtrommel aufzunehmen.

7. Mischtrommelantrieb nach Anspruch 1, dadurch **ge- kennzeichnet,** dass der Antriebsmotor (5) ein inneres Zentralrad (6) einer Planetenstufe (9) antreibt, dessen äußeres Zentralrad (8) den Abtrieb bildet und die Trommel (1) antreibt, und dessen Planetenträger (7) ortsfest mit dem Gehäuse (11) in Verbindung steht, wobei die Lagerung (12) zwischen dem Antriebsmotor (5) und dem Planetenrad (7) angeordnet ist.

8. Mischtrommelantrieb nach Anspruch 8, **dadurch gekennzeichnet, dass** das Planetengetriebe (9), zumindest teilweise, innerhalb der Trommel (1) angeordnet ist.

## Claims

1. Mixing-drum drive having a mixing drum (1), a bearing block (4) and a drive motor (5), by means of which the mixing drum (1) can be driven, having a mounting (12), via which the mixing drum (1) is mounted rotatably, having a housing (11), via which the weight of the mixing drum can be introduced into the bearing block (4), and having a compensation device (25) for compensating for the movements between the mixing drum (1) and the bearing block (4), **characterized in that** the compensation device (25) comprises an elastic element (17), the elastic element (17) interacting with first and second components (20, 16) of the mixing-drum drive in such a way that the forces of the mixing drum are transmitted via the elastic element (17), the first component (20) being connected to the bearing block (4) and the second component (16) being connected to the housing (11), the elastic element (17) being connected to the second component (16) with the aid of an adhesive or by vulcanization or the elastic element (17) being inserted loosely into the second component (16), and the elastic element (17) either lying on the first component (20) or being connected to it via an adhesive bond or via a vulcanized bond, and, in order to prevent the second component (16) from rising up from the bearing block (4) counter to the weight of the drum and, as a result, to hold the mixing drum (1) on the bearing block (4) counter to the weight of the mixing drum (1), the second component (16) being configured in such a way that it forms a mechanical stop in conjunction with the first component (20) or in conjunction with the bearing block (4), which mechanical stop is configured in such a way that the housing (11) can move only within a certain region as a result of deformation of the elastic element (17) and the said region is delimited by stops of the second component (16) on the bearing block (4) or the first component (20).

2. Mixing-drum drive according to Claim 1, **characterized in that** the second component (16) is configured integrally with the housing (11).

3. Mixing-drum drive according to Claim 1, **characterized in that** the second component (16) is of cup-like configuration and surrounds the elastic element (17).

4. Mixing-drum drive according to Claim 1, **characterized in that** the elastic element (17) has a metallic reinforcing core (18).

5. Mixing-drum drive according to Claim 1, **characterized in that** the first component (20) can be connected to the bearing block (4) via connecting elements (21).

6. Mixing-drum drive according to Claim 1, **characterized in that** the compensation device (25) has an axial region (19), in which the contact area between the first component (20), the second component (16) and the elastic element (17) is of enlarged configuration, in order to absorb the axial force of the mixing drum.

7. Mixing-drum drive according to Claim 1, **characterized in that** the drive motor (5) drives an inner central gear (6) of a planetary stage (9), the outer central gear (8) of which forms the output and drives the drum (1), and the planetary carrier (10) of which is connected to the housing (11) in a stationary manner, the mounting (12) being arranged between the drive motor (5) and the planetary gear (7).

8. Mixing-drum drive according to Claim 8, **characterized in that** the planetary gear mechanism (9) is arranged, at least partially, within the drum (1).

## Revendications

1. Dispositif d'entraînement d'un tambour mélangeur comprenant un tambour mélangeur (1), un bloc palier (4) et un moteur d'entraînement (5), au moyen duquel le tambour mélangeur (1) peut être entraîné, un support sur palier (12), par le biais duquel le tambour mélangeur (1) est supporté en rotation, un boîtier (11), par le biais duquel la force de pesanteur du tambour mélangeur peut être transférée au bloc palier (4), un dispositif d'équilibrage (25) pour équilibrer les mouvements entre le tambour mélangeur (1) et le bloc palier (4), **caractérisé en ce que** le dispositif d'équilibrage (25) se compose d'un élément élastique (17), l'élément élastique (17) coopérant avec des premier et deuxième composants (20, 16) du dispositif d'entraînement de tambour mélangeur, de telle sorte que les forces du tambour mélangeur soient transférées par le biais de l'élément élastique (17), le premier composant (20) étant relié au bloc palier (4) et le deuxième composant (16) étant relié au boîtier (11), l'élément élastique (17) étant relié au deuxième composant (16) par collage ou par vulcanisation ou l'élément élastique (17) étant introduit lâchement dans le deuxième composant (16) et l'élément élastique (17) reposant sur le premier composant (20) ou bien étant relié à celui-ci par le biais d'une liaison par collage ou par le biais d'une liaison par vulcanisation et afin d'éviter un soulèvement du deuxième composant (16) à l'encontre de la force de pesanteur du tambour depuis le bloc palier (4), afin que le tambour mélangeur (1) soit retenu à l'encontre de la force de pesanteur du tambour mélangeur (1) sur le bloc palier (4), le deuxième composant (16) étant réalisé de telle sorte qu'en association avec le premier composant (20) ou en association avec le bloc palier (4), il forme une butée mécanique réalisée de telle sorte que le boîtier (11) ne puisse se déplacer qu'à l'intérieur d'une plage déterminée par déformation de l'élément élastique (17) et cette plage étant limitée par des butées du deuxième composant (16) sur le bloc palier (4) ou sur le premier composant (20).

2. Dispositif d'entraînement d'un tambour mélangeur selon la revendication 1, **caractérisé en ce que** le deuxième composant (16) est réalisé d'une seule pièce avec le boîtier (11).

3. Dispositif d'entraînement d'un tambour mélangeur selon la revendication 1, **caractérisé en ce que** le deuxième composant (16) réalisé en forme de pot et entoure l'élément élastique (17).

4. Dispositif d'entraînement d'un tambour mélangeur selon la revendication 1, **caractérisé en ce que** l'élément élastique (17) présente un noyau de renforcement métallique (18).

5. Dispositif d'entraînement d'un tambour mélangeur selon la revendication 1, **caractérisé en ce que** le premier composant (20) peut être assemblé au bloc palier (4) par le biais d'éléments de liaison (21).

6. Dispositif d'entraînement d'un tambour mélangeur selon la revendication 1, **caractérisé en ce que** le dispositif d'équilibrage (25) présente une région axiale (19) dans laquelle la surface de contact entre le premier composant (20), le deuxième composant (16) et l'élément élastique (17) est réalisée de manière agrandie afin de recevoir la force axiale du tambour mélangeur.

7. Dispositif d'entraînement d'un tambour mélangeur selon la revendication 1, **caractérisé en ce que** le moteur d'entraînement (5) entraîne une roue centrale interne (6) d'un étage planétaire (9) dont la roue centrale externe (8) forme la sortie et entraîne le tambour (1), et dont le porte-satellites (10) est en liaison fixe avec le boîtier (11), le support sur palier (12) étant disposé entre le moteur d'entraînement (5) et la roue planétaire (7).

8. Dispositif d'entraînement d'un tambour mélangeur selon la revendication 8, **caractérisé en ce que** l'engrenage planétaire (9) est disposé au moins en partie à l'intérieur du tambour (1).
